# EUROPÄISCHE PATENTANMELDUNG

(11) **EP 2 157 444 A2**
(43) Veröffentlichungstag der Anmeldung: **24.02.2010**
(21) Anmeldenummer: 09165266.9
(22) Anmeldetag: 13.07.2009
(51) Int. Cl.: G01S 13/02, G01S 5/00

(54) **Verfahren und Gerät zum Bestimmen einer Position einer Kommunikations-Vorrichtung**

(30) Priorität: 18.08.2008 DE 102008038246
(71) Anmelder: SIEMENS AKTIENGESELLSCHAFT, 80333 München (DE)
(72) Erfinder: Ramirez, Alejandro, 80797, München (DE); Schwingenschlögl, Christian, 85640, Putzbrunn (DE)

(57) **Zusammenfassung**

Die Erfindung betrifft ein Verfahren und ein Gerät zum Bestimmen einer Position einer Kommunikations-Vorrichtung, insbesondere eines drahtlosen Kommunikationsgerätes, wie beispielsweise ein Mobilfunkgerät, ein Notebook, ein PDA oder dergleichen. Dabei wird zum Bestimmen einer Position einer ersten Vorrichtung zunächst ein erstes Signal von einer zweiten Vorrichtung zu der ersten Vorrichtung übertragen. Anschließend wird ein zweites Signal von der ersten Vorrichtung zu der zweiten Vorrichtung als Antwort auf das von der ersten Vorrichtung empfangene erste Signal übertragen, wobei das erste Signal und das zweite Signal über zumindest zwei unterschiedliche Medien übertragen werden. Daraufhin wird die Signalstärke des von der zweiten Vorrichtung empfangenen zweiten Signals und die Laufzeit von einem ersten Zeitpunkt des Sendens des ersten Signals bis zu einem zweiten Zeitpunkt des Empfangens des zweiten Signals gemessen. Die Position der ersten Vorrichtung wird schließlich in Abhängigkeit von der gemessenen Signalstärke des empfangenen zweiten Signals und der gemessenen Laufzeit berechnet. Das erfindungsgemäße Verfahren und Gerät bietet den Vorteil, dass eine zweidimensionale Positions- oder Ortsbestimmung der ersten Vorrichtung relativ zu der Position der zweiten Vorrichtung ermöglicht wird, bei der es sich um eine ortsfeste Basisstation handeln kann.

## Beschreibung

Die Erfindung betrifft ein Verfahren und ein Gerät zum Bestimmen einer Position einer Kommunikations-Vorrichtung.

Das technische Gebiet der Erfindung betrifft die Positionsbestimmung oder Ortsbestimmung einer Kommunikations-Vorrichtung oder Vorrichtung, wie beispielsweise eines drahtlosen Kommunikationsgeräts, Mobilfunkgeräts, MDA oder PDA.

Dabei sind der Anmelderin intern Lösungen bekannt, eine eindimensionale Position einer Kommunikations-Vorrichtung zu bestimmen. Dabei wird der Abstand der Kommunikations-Vorrichtung von einer ortsfesten Basisstation berechnet, wobei die Signale zur Positionsbestimmung zwischen der Kommunikations-Vorrichtung und der Basisstation über ein abstrahlendes Kabel und über Luft ausgetauscht werden und der Abstand der Kommunikations-Vorrichtung zu dem abstrahlenden Kabel konstant ist. Ein Beispiel für einen solchen konstanten Abstand zwischen dem abstrahlenden Kabel und der Kommunikations-Vorrichtung liegt dann vor, wenn die Kommunikations-Vorrichtung in einem Zug oder dergleichen verbaut ist und das abstrahlende Kabel parallel zu den Gleisen verlegt ist.

Nachteiligerweise sind allerdings bisher nur Lösungen für eine eindimensionale Positionsbestimmung bekannt, nicht aber für eine zweidimensionale Positionsbestimmung mit variablem Abstand zwischen dem abstrahlenden Kabel und der Kommunikations-Vorrichtung, deren Position bestimmt werden soll.

Demnach ist es eine Aufgabe der vorliegenden Erfindung, eine zweidimensionale Positionsbestimmung einer Vorrichtung zu schaffen.

Erfindungsgemäß wird diese gestellte Aufgabe durch ein Verfahren mit den Merkmalen des Patentanspruchs 1 und/oder durch ein Gerät mit den Merkmalen des Patentanspruchs 14 gelöst.

Demgemäß wird ein Verfahren zum Bestimmen einer Position einer ersten Vorrichtung vorgeschlagen, welches folgende Schritte aufweist:
a) Übertragen eines ersten Signals von einer zweiten Vorrichtung zu der ersten Vorrichtung;
b) Übertragen eines zweiten Signals von der ersten Vorrichtung zu der zweiten Vorrichtung als Antwort auf das von der ersten Vorrichtung empfangene erste Signal, wobei das erste Signal und das zweite Signal über zumindest zwei unterschiedliche Medien übertragen werden;
c) Messen der Signalstärke des von der zweiten Vorrichtung empfangenen zweiten Signals;
d) Messen der Laufzeit von einem ersten Zeitpunkt des Sendens des ersten Signals bis zu einem zweiten Zeitpunkt des Empfangens des zweiten Signals; und
e) Berechnen der Position der ersten Vorrichtung in Abhängigkeit von der gemessenen Signalstärke des empfangenen zweiten Signals und der gemessenen Laufzeit.

Weiter wird ein Computerprogrammprodukt vorgeschlagen, welches auf einer programmgesteuerten Einrichtung die Durchführung obiger Schritte a) bis e) des Verfahrens zum Bestimmen einer Position einer ersten Vorrichtung veranlasst.

Ein Computerprogramm-Produkt wie ein Computerprogramm-Mittel kann beispielsweise als Speichermedium, wie Speicherkarte, USB-Stick, Floppy, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen.

Des Weiteren wird ein Gerät zum Bestimmen einer Position einer ersten Vorrichtung vorgeschlagen, welches aufweist:
a) ein Sendemittel, welches dazu eingerichtet ist, ein erstes Signal an die erste Vorrichtung zu übertragen, wobei das erste Signal dazu geeignet ist, ein Senden eines zweiten Signals von der das erste Signal empfangenden ersten Vorrichtung zu initiieren, , wobei das erste Signal und das zweite Signal über zumindest zwei unterschiedliche Medien übertragen werden;
b) ein Empfangsmittel, welches dazu eingerichtet ist, das von der ersten Vorrichtung gesendete zweite Signal zu empfangen;
c) ein erstes Messmittel, welches dazu eingerichtet ist, die Signalstärke des empfangenen zweiten Signals zu messen;
d) ein zweites Messmittel, welches dazu eingerichtet ist, die Laufzeit von einem ersten Zeitpunkt des Sendens des ersten Signals bis zu einem zweiten Zeitpunkt des Empfangens des zweiten Signals zu messen; und
e) ein Berechnungsmittel, welches dazu eingerichtet ist, die Position der ersten Vorrichtung in Abhängigkeit von der gemessenen Signalstärke des empfangenen zweiten Signals und der gemessenen Laufzeit zu berechnen.

Ferner wird eine Anordnung vorgeschlagen, welche aufweist:
- ein wie oben beschriebenes Gerät zum Bestimmen einer Position einer ersten Vorrichtung; und
- eine Anzahl N; N ≥ 1; von ersten Vorrichtungen, wobei die jeweilige erste Vorrichtung dazu eingerichtet ist, das zweite Signal als Antwort auf das von dem Gerät gesendeten ersten Signal an das Gerät zu übertragen.

Ein Vorteil der vorliegenden Erfindung liegt darin, dass eine zweidimensionale Positionsbestimmung oder Ortsbestimmung der ersten Vorrichtung relativ zu der Position der zweiten Vorrichtung ermöglicht ist.

Die zweidimensionale Positionsbestimmung wird erfindungsgemäß durch Folgendes ermöglicht:

Durch das Messen der Signalstärke des von der zweiten Vorrichtung empfangenen zweiten Signals kann eine erste Kurve möglicher Positionen der ersten Vorrichtung in einer X-Y-Ebene bereitgestellt werden, wobei X den horizontalen Abstand der ersten Vorrichtung zu der zweiten Vorrichtung und Y den vertikalen Abstand der ersten Vorrichtung zu der zweiten Vorrichtung bezeichnet.

Durch das Messen der Laufzeit zwischen dem Senden des ersten Signals und dem Empfangen des zweiten Signals kann eine zweite Kurve möglicher Positionen der ersten Vorrichtung in der X-Y-Ebene bereitgestellt werden.

Weiter entspricht der Schnittpunkt der ersten Kurve mit der zweiten Kurve der Position der ersten Vorrichtung relativ zu der zweiten Vorrichtung.

Obgleich es theoretisch möglich ist, dass sich zwei oder mehrere Schnittpunkte zwischen der ersten Kurve und der zweiten Kurve ergeben, kann die tatsächliche Position der ersten Vorrichtung mittels eines Plausibilitäts-Checks auch infolge der linearen Abhängigkeit zwischen der Laufzeit und dem Abstand zwischen der ersten Vorrichtung und der zweiten Vorrichtung ermittelt werden.

Eine Möglichkeit für die Ausgestaltung des Schrittes c) des erfindungsgemäßen Verfahrens, nämlich des Messens der Signalstärke des von der zweiten Vorrichtung empfangenen zweiten Signals, ist in "Indoor Radiated-Mode Leaky Feeder Propagation at 2.0 GHz", Y.P. Zhang, IEEE Transactions on Vehicular Technology, Band 50, Nr. 2, März 2001, beschrieben.

Weiter ist eine Möglichkeit für die Ausgestaltung des Schrittes d), nämlich des Messens der Laufzeit zwischen dem Senden des ersten Signals bis zum Empfangen des zweiten Signals, in der DE 10 2006 045 350 A1 beschrieben.

Vorteilhafte Ausgestaltungen und Weiterbildungen der Erfindung ergeben sich aus den Unteransprüchen sowie der Beschreibung unter Bezugnahme auf die Zeichnungen.

Gemäß einer bevorzugten Weiterbildung werden das erste Signal und das zweite Signal zumindest teilweise drahtlos übertragen.

Gemäß einer weiteren bevorzugten Weiterbildung verursachen die zumindest zwei unterschiedlichen Medien eine unterschiedliche Signallaufzeit und eine unterschiedliche Signaldämpfung.

Gemäß einer weiteren bevorzugten Weiterbildung werden die zumindest zwei unterschiedlichen Medien ausgebildet als ein abstrahlendes Kabel und Luft, ein abstrahlendes Kabel und Wasser, ein Glasfaserkabel und Luft, ein Glasfaserkabel und Wasser, ein Polymerfaserkabel und Luft oder ein Polymerfaserkabel und Wasser.

Jegliche weitere Kombination zweier unterschiedlicher Medien ist möglich, solange sichergestellt ist, dass die beiden unterschiedlichen Medien eine unterschiedliche Signallaufzeit und eine unterschiedliche Signaldämpfung verursachen.

Gemäß einer weiteren bevorzugten Weiterbildung wird vor der Durchführung des Schrittes a) eine Kalibrierung an einer bekannten Referenzposition der ersten Vorrichtung zur Bestimmung einer Referenzlaufzeit und einer Referenzsignalstärke des von der zweiten Vorrichtung empfangenen zweiten Signals durchgeführt.

Gemäß einer weiteren bevorzugten Weiterbildung werden die Referenzlaufzeit von dem ersten Zeitpunkt des Sendens des ersten Signals zu dem zweiten Zeitpunkt des Empfangens des zweiten Signals und die Referenzsignalstärke des von der zweiten Vorrichtung empfangenen zweiten Signals von der zweiten Vorrichtung gemessen, wobei die Referenzposition der ersten Vorrichtung bzw. der zweiten Vorrichtung bekannt ist.

Gemäß einer weiteren bevorzugten Weiterbildung wird die Position der ersten Vorrichtung in Abhängigkeit von der von der zweiten Vorrichtung gemessenen Signalstärke, von der von der zweiten Vorrichtung gemessenen Laufzeit, von der bekannten Referenzposition der ersten Vorrichtung, von der gemessenen Referenzlaufzeit und der gemessenen Referenzsignalstärke des empfangenen zweiten Signals berechnet.

Gemäß einer weiteren bevorzugten Weiterbildung wird die Position der ersten Vorrichtung in Abhängigkeit von der gemessenen Signalstärke des empfangenen zweiten Signals, der gemessenen Laufzeit, einer der zweiten Vorrichtung bekannten Verzögerungszeit zwischen einem dritten Zeitpunkt des Empfangens des ersten Signals durch die erste Vorrichtung und einem vierten Zeitpunkt des Sendens des zweiten Signals durch die erste Vorrichtung und einer der zweiten Vorrichtung bekannten Sendeleistung des zweiten Signals von der zweiten Vorrichtung berechnet.

Gemäß einer weiteren bevorzugten Weiterbildung wird das zweite Signal mit einem Datenfeld ausgebildet, welches eine Verzögerungszeitinformation beinhaltet, welche die jeweilige Verzögerungszeit angibt, welche der jeweiligen Differenz zwischen dem vierten Zeitpunkt und dem dritten Zeitpunkt entspricht.

Gemäß einer weiteren bevorzugten Weiterbildung wird ein drittes Signal von der ersten Vorrichtung zu der zweiten Vorrichtung vor oder nach dem ersten Signal übertragen, welches ein Datenfeld aufweist, welches eine Verzögerungsinformation beinhaltet, welche die jeweilige Verzögerungszeit angibt, welche der jeweiligen Differenz zwischen dem vierten Zeitpunkt und dem dritten Zeitpunkt entspricht.

Weiter beinhaltet das dritte Signal vorzugsweise ein weiteres Datenfeld, welches eine Sendeleistungsinformation beinhaltet, welche die jeweilige Sendeleistung der ersten Vorrichtung angibt. Weiterhin kann das weitere Datenfeld auch mittels eines vierten Signals von der ersten Vorrichtung an die zweite Vorrichtung übertragen werden.

Gemäß einer weiteren bevorzugten Weiterbildung wird vor der Durchführung des Schrittes a) zumindest ein Kalibrierungsschritt zur Bestimmung der Verzögerungszeit zwischen dem dritten Zeitpunkt und dem vierten Zeitpunkt durchgeführt. Anschließend kann die bestimmte Verzögerungszeit in der zweiten Vorrichtung vor der Durchführung des Schrittes a) gespeichert wird.

Gemäß einer weiteren bevorzugten Weiterbildung wird die erste Vorrichtung als eine mobile Vorrichtung und/oder die zweite Vorrichtung als eine ortsfeste Vorrichtung ausgebildet.

Ist die zweite Vorrichtung eine ortsfeste Vorrichtung und ist damit ihre absolute Position bekannt, so kann aus der erfindungsgemäßen berechneten relativen Position der ersten Vorrichtung zu der zweiten Vorrichtung und der bekannten absoluten Position der zweiten Vorrichtung auch die absolute Position der ersten Vorrichtung berechnet werden.

Gemäß einer weiteren bevorzugten Weiterbildung wird die erste Vorrichtung als eine ortsfeste Vorrichtung und die zweite Vorrichtung als eine mobile Vorrichtung ausgebildet.

Gemäß einer weiteren bevorzugten Weiterbildung wird die erste Vorrichtung als ein mobile, drahtlose Kommunikationseinrichtung, insbesondere als Mobilfunkgerät, Notebook, PDA oder MDA ausgebildet.

Gemäß einer bevorzugten Ausgestaltung weist das Gerät ein Timer-Mittel auf, welches die Differenz zwischen dem zweiten Zeitpunkt und dem ersten Zeitpunkt misst.

Gemäß einer weiteren bevorzugten Ausgestaltung ist das erste Signal mit zumindest einem Adressfeld ausgebildet, wobei das jeweilige Adressfeld eine Adresse einer ersten Vorrichtung als Empfänger des ersten Signals aufweist.

Gemäß einer weiteren bevorzugten Ausgestaltung hat das Gerät ein Kanalcodiermittel, welches dazu eingerichtet ist, das erste Signal derart zu codieren, dass dieses nur von einer vorbestimmbaren Menge der Anzahl N der ersten Vorrichtungen decodierbar ist.

Die Erfindung wird nachfolgend anhand der in den schematischen Figuren angegebenen Ausführungsbeispiele näher erläutert. Es zeigen:
- Figur 1: ein schematisches Ablaufdiagramm eines ersten Ausführungsbeispiels des erfindungsgemäßen Ver- fahrens zum Bestimmen einer Position einer ersten Vorrichtung;
- Figur 2: ein beispielhaftes X-Y-Diagramm zur Darstellung einer Kurve möglicher Positionen der Vorrichtung in Abhängigkeit der gemessenen Signalstärke;
- Figur 3: ein beispielhaftes X-Y-Diagramm zur Darstellung der Position der Vorrichtung in Abhängigkeit der gemessenen Signalstärke und der gemessenen Lauf- zeit;
- Figur 4: ein schematisches Ablaufdiagramm eines zweiten Ausführungsbeispiels des erfindungsgemäßen Ver- fahrens zum Bestimmen einer Position einer ersten Vorrichtung;
- Figur 5: ein schematisches Ablaufdiagramm eines dritten Ausführungsbeispiels des erfindungsgemäßen Ver- fahrens zum Bestimmen einer Position einer ersten Vorrichtung;
- Figur 6: ein schematisches Blockschaltbild eines Ausfüh- rungsbeispiels des Signallaufs des ersten und zweiten Signals gemäß der Erfindung; und
- Figur 7: ein schematisches Blockschaltbild eines Ausfüh- rungsbeispiels einer Anordnung mit dem erfin- dungsgemäßen Gerät zum Bestimmen einer Position einer ersten Vorrichtung.

In allen Figuren sind gleiche bzw. funktionsgleiche Mittel und Einrichtungen - sofern nichts anderes angegeben - mit denselben Bezugszeichen versehen.

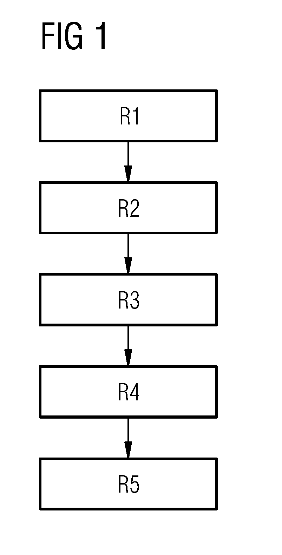

Figur 1 zeigt ein schematisches Ablaufdiagramm eines ersten Ausführungsbeispiels des erfindungsgemäßen Verfahrens zum Bestimmen einer Position P einer ersten Vorrichtung 10.

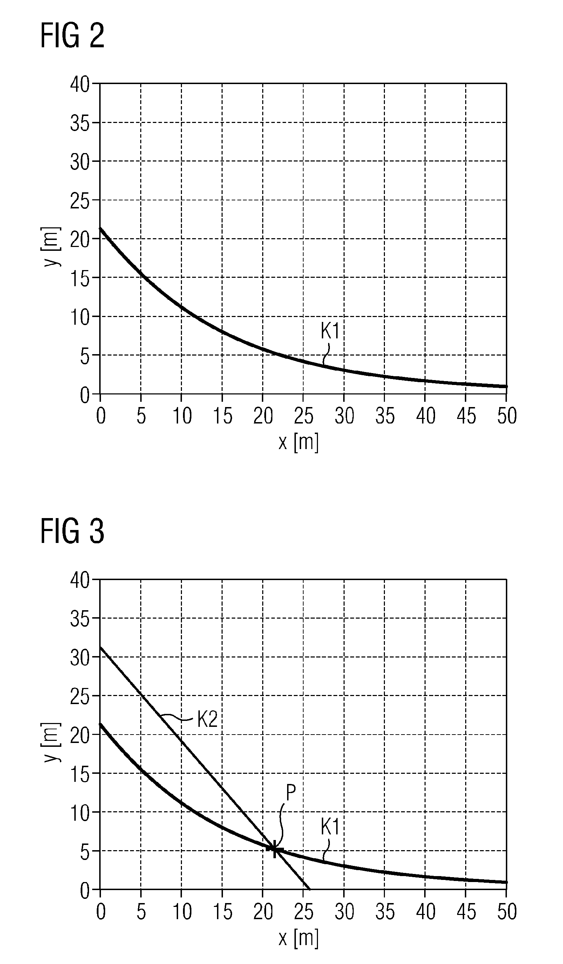

Nachfolgend wird das erfindungsgemäße Verfahren anhand des Blockschaltbildes in Figur 1 in Bezug auf die Figuren 2, 3, 6 und 7 beschrieben. Das Ausführungsbeispiel des erfindungsgemäßen Verfahrens nach Figur 1 weist die Verfahrensschritte R1 bis R5 auf:

### Verfahrensschritt R1:

Ein erstes Signal X1 wird von einer zweiten Vorrichtung 20 zu der ersten Vorrichtung 10 übertragen.

Beispielsweise ist die erste Vorrichtung 10 eine mobile Vorrichtung. Diese kann als mobile, drahtlose Kommunikationseinrichtung, insbesondere als Mobilfunkgerät, Notebook, PDA oder MDA, ausgebildet sein. Die zweite Vorrichtung 20 ist beispielsweise eine ortsfeste Vorrichtung, wie eine Basisstation.

### Verfahrensschritt R2:

Als Antwort auf das von der ersten Vorrichtung 10 empfangene erste Signal X1 wird ein zweites Signal X2 von der ersten Vorrichtung 10 zu der zweiten Vorrichtung 20 übertragen. Das erste Signal X1 und das zweite Signal X2 werden über zumindest zwei unterschiedlichen Medien 30, 40 übertragen.

Dabei werden das erste Signal X1 und das zweite Signal X2 beispielsweise zumindest teilweise drahtlos übertragen. Die zumindest zwei unterschiedlichen Medien 30, 40 verursachen eine unterschiedliche Signallaufzeit und eine unterschiedliche Signaldämpfung des ersten und zweiten Signals X1, X2.

Beispielsweise sind die zumindest zwei unterschiedlichen Medien 30, 40 ausgebildet als ein abstrahlendes Kabel und Luft, ein abstrahlendes Kabel und Wasser, ein Glasfaserkabel und Luft, ein Glasfaserkabel und Wasser, ein Polymerfaserkabel und Luft oder ein Polymerfaserkabel und Wasser.

Ein abstrahlendes Kabel ist beispielsweise aus der DE 69627599 T2 bekannt. Solche abstrahlende Kabel sind auch als "Leaky Wave Cable", "Leaky Coax" oder "Radiating Cable" bekannt.

### Verfahrensschritt R3:

Die Signalstärke E des von der zweiten Vorrichtung 20 empfangenen zweiten Signals X2 wird gemessen. Dazu zeigt Figur 2 ein beispielhaftes X-Y-Diagramm zur Darstellung einer ersten Kurve K1 möglicher Positionen der ersten Vorrichtung 10 in Abhängigkeit der gemessenen Signalstärke E.

### Verfahrensschritt R4:

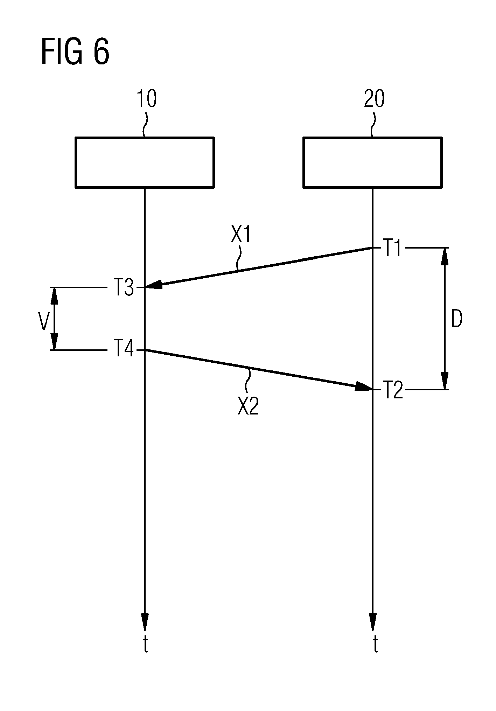

Die Laufzeit D zwischen einem ersten Zeitpunkt T1 des Sendens des ersten Signals X1 bis zu einem zweiten Zeitpunkt T2 des Empfangens des zweiten Signals X2 wird gemessen. Dazu zeigt Figur 6 ein schematisches Blockschaltbild eines Ausführungsbeispiels des Signallaufs des ersten und zweiten Signals X1, X2 und die sich daraus ergebende Laufzeit D zwischen den Zeitpunkten T1 und T2. Weiter ist in Figur 3 zeigt neben der ersten Kurve K1 gemäß Figur 2 eine zweite Kurve K2 möglicher Positionen der ersten Vorrichtung 10 in Abhängigkeit der gemessenen Laufzeit D dargestellt.

### Verfahrensschritt R5:

Die Position P der ersten Vorrichtung 10 wird in Abhängigkeit von der gemessenen Signalstärke E des empfangenen zweiten Signals X2 und der gemessenen Laufzeit D berechnet. Dabei ergibt sich die Position P mit Bezug auf Figur 3 beispielsweise als Schnittpunkt P zwischen der ersten Kurve K1 und der zweiten Kurve K2.

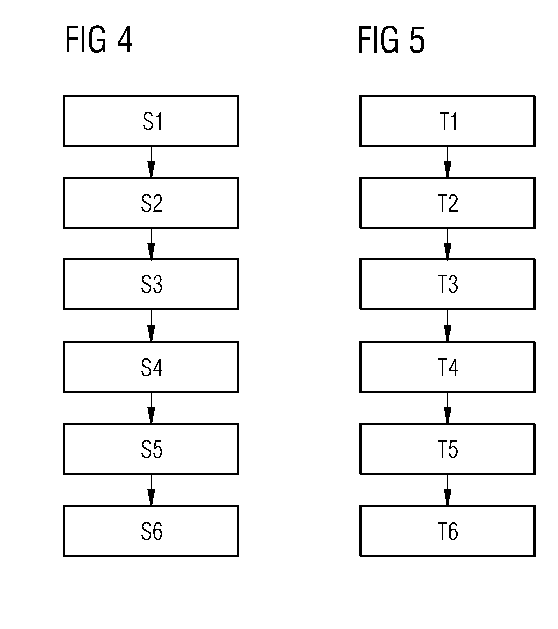

Figur 4 zeigt ein schematisches Ablaufdiagramm eines zweiten Ausführungsbeispiels des erfindungsgemäßen Verfahrens zum Bestimmen einer Position P der ersten Vorrichtung 10.

Das zweite Ausführungsbeispiel des erfindungsgemäßen Verfahrens nach Figur 4 weist die Verfahrensschritte S1 bis S6 auf, wobei die Verfahrensschritte S2 bis S5 den Verfahrensschritten R1 bis R4 der Figur 1 entsprechen. Aus diesem Grund werden die Verfahrensschritte S2 bis S5 im Folgenden nicht mehr erläutert, sondern es wird diesbezüglich auf die Verfahrensschritte R1 bis R4 der Figur 1 verwiesen.

### Verfahrensschritt S1:

An einer bekannten Referenzposition der ersten Vorrichtung 10 wird eine Kalibrierung zur Bestimmung einer Referenzlaufzeit und einer Referenzsignalstärke des von der zweiten Vorrichtung 20 empfangenen zweiten Signals X2 durchgeführt. Dabei wird die Referenzlaufzeit von dem ersten Zeitpunkt T1 des Sendens des ersten Signals X1 zu dem zweiten Zeitpunkt T2 des Empfangens des zweiten Signals X2 gemessen. Weiter wird die Referenzsignalstärke des von der zweiten Vorrichtung 20 empfangen zweiten Signals X2 von der zweiten Vorrichtung 20 gemessen. Wie oben bereits ausgeführt, ist es Voraussetzung für die Kalibrierung, dass die Referenzposition der ersten Vorrichtung 10 der zweiten Vorrichtung 20 bekannt ist.

### Verfahrensschritte S2 bis S5:

Die Verfahrensschritte S2 bis S5 entsprechen den mit Bezug zu Figur 1 erläuterten Verfahrensschritten R1 bis R4.

### Verfahrensschritt S6:

Die Position P der ersten Vorrichtung 10 wird in Abhängigkeit von der von der zweiten Vorrichtung 20 gemessenen Signalstärke E, von der von der zweiten Vorrichtung 20 gemessenen Laufzeit D, von der bekannten Referenzposition der ersten Vorrichtung 10, von der gemessenen Referenzlaufzeit und der gemessenen Referenzsignalstärke des empfangenen zweiten Signals X2 berechnet.

In Figur 5 ist ein schematisches Ablaufdiagramm eines dritten Ausführungsbeispiels des erfindungsgemäßen Verfahrens zum Bestimmen der Position P der ersten Vorrichtung 10 dargestellt.

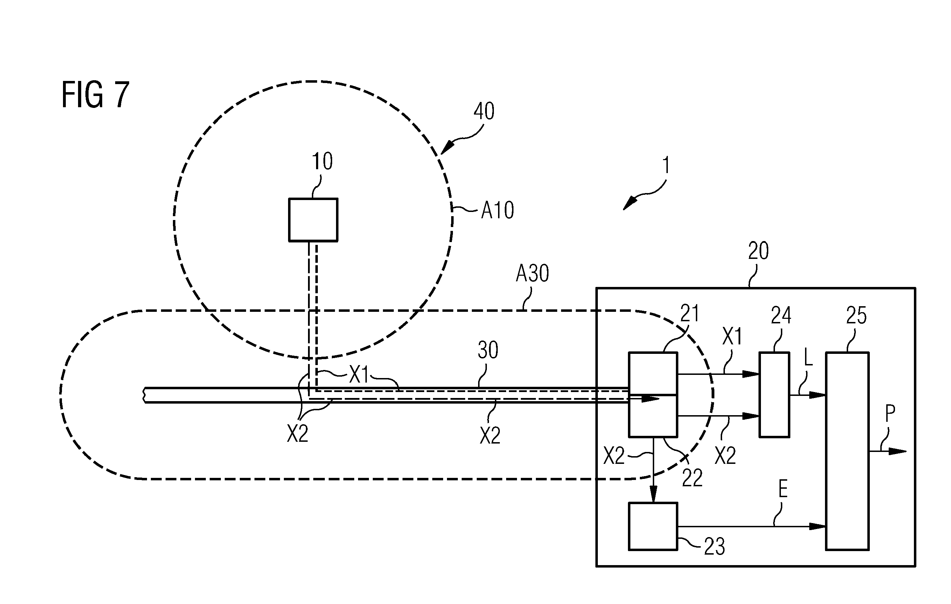

Nachfolgend wird das dritte Ausführungsbeispiel des erfindungsgemäßen Verfahrens anhand des Blockschaltbildes in Figur 5 unter Bezugnahme auf Figuren 6 und 7 erläutert.

Das dritte Ausführungsbeispiel des erfindungsgemäßen Verfahrens hat die Verfahrensschritte T1 bis T6:

### Verfahrensschritt T1:

Zur Bestimmung einer Verzögerungszeit V zwischen einem dritten Zeitpunkt T3 des Empfangens des ersten Signals X1 durch die erste Vorrichtung 10 und einem vierten Zeitpunkt T4 des Sendens des zweiten Signals X2 durch die erste Vorrichtung 10 wird zumindest ein Kalibrierungsschritt durchgeführt. Die durch den zumindest einen Kalibrierungsschritt bestimmte Verzögerungszeit V wird in der zweiten Vorrichtung 20 gespeichert. Dazu kann die zweite Vorrichtung 20 eine Speichervorrichtung aufweisen. Die Verzögerungszeit V ist die Zeit, die die erste Vorrichtung 10 benötigt, um das zweite Signal X2 nach einem festgestellten Empfang des ersten Signals X1 zu generieren und zu senden.

### Verfahrensschritt T2:

Nach der gemäß obigen Verfahrensschritt T1 durchgeführten Kalibrierung kann eine unbekannte Position P der ersten Vorrichtung bestimmt werden. Dazu wird ein erstes Signal X1 von der zweiten Vorrichtung 20 zu der ersten Vorrichtung 10, die an der vorerst unbekannten Position P ist, übertragen.

### Verfahrensschritt T3:

Als Antwort auf das von der ersten Vorrichtung 10 empfangene erste Signal X1 wird ein zweites Signal X2 von der ersten Vorrichtung 10 zu der zweiten Vorrichtung 20 übertragen, wobei das erste Signal X1 und das zweite Signal X2 über zumindest zwei unterschiedliche Medien 30, 40 übertragen werden.

Dabei kann das zweite Signal X2 mit einem Datenfeld ausgebildet werden, welches eine Verzögerungszeitinformation beinhaltet, welche die jeweilige Verzögerungszeit V angibt, welche der jeweiligen Differenz zwischen dem vierten Zeitpunkt T4 und dem dritten Zeitpunkt T3 entspricht. In einem solchen Fall der Ausbildung des zweiten Signals X2 mit einem solchen Datenfeld könnte der Verfahrensschritt T1 entfallen.

Alternativ zu der Ausgestaltung des zweiten Signals X2 mit einem Datenfeld mit einer Verzögerungszeitinformation kann auch ein drittes Signal S3 von der ersten Vorrichtung 10 zu der zweiten Vorrichtung 20 vor oder nach dem zweiten Signal X2 übertragen werden. Das dritte Signal S3 weist dabei vorzugsweise ein Datenfeld auf, welches eine Verzögerungsinformation beinhaltet, welche die jeweilige Verzögerungszeit V angibt, welche der jeweiligen Differenz zwischen dem vierten Zeitpunkt T4 und dem dritten Zeitpunkt T3 entspricht.

### Verfahrensschritt T4:

Die Signalstärke E des von der zweiten Vorrichtung 20 empfangenen zweiten Signals X2 wird gemessen.

### Verfahrensschritt T5:

Die Laufzeit D von dem ersten Zeitpunkt T1 des Sendens des ersten Signals X1 bis zu dem zweiten Zeitpunkt T2 des Empfangens des zweiten Signals X2 wird gemessen.

### Verfahrensschritt T6:

Die Position P der ersten Vorrichtung 10 wird in Abhängigkeit von der gemessenen Signalstärke E des empfangenen zweiten Signals X2, der gemessenen Laufzeit D, der der zweiten Vorrichtung 20 bekannten Verzögerungszeit V und einer der zweiten Vorrichtung 20 bekannten Sendeleistung S des zweiten Signals X2 von der zweiten Vorrichtung 20 berechnet.

Figur 7 zeigt ein schematisches Blockschaltbild eines Ausführungsbeispiels einer Anordnung 1 mit dem erfindungsgemäßen Gerät 20 zum Bestimmen einer Position P einer ersten Vorrichtung 10.

Ohne Einschränkung der Allgemeinheit sind in Figur 7 die zwei unterschiedlichen Medien 30, 40 als ein abstrahlendes Kabel 30 und als Luft 40 ausgebildet.

In Figur 7 bezeichnet das Bezugszeichen A10 das Antennenfeld der ersten Vorrichtung 10, und das Bezugszeichen A30 bezeichnet das Antennenfeld des abstrahlenden Kabels 30.

Durch die Antennenfelder A10 und A30 ist eine Kommunikationsverbindung zwischen der ersten Vorrichtung 10 und dem Gerät 20 ausgebildet.

Weiter zeigen die Bezugszeichen X1 und X2 schematisch die Signalläufe des ersten Signals X1 und des zweiten Signals X2 in Figur 7.

Das Gerät 20 ist zur Bestimmung der Position P der ersten Vorrichtung 10 geeignet und weist dazu ein Sendemittel 21, ein Empfangsmittel 22, ein erstes Messmittel 23, ein zweites Messmittel 24 und ein Berechnungsmittel 25 auf.

Das Sendemittel 21 ist dazu eingerichtet, ein erstes Signal X1 an die erste Vorrichtung 10 zu übertragen, wobei das erste Signal X1 dazu geeignet ist, ein Senden eines zweiten Signals X2 von der das erste Signal X1 empfangenden ersten Vorrichtung 10 zu initiieren. Dabei werden das erste Signal X1 und das zweite Signal X2 über zumindest zwei unterschiedliche Medien 30, 40 übertragen.

Weiter ist das Empfangsmittel 22 dazu eingerichtet, das von der ersten Vorrichtung 10 gesendete zweite Signal X2 zu empfangen.

Weiterhin ist das erste Messmittel 23 dazu eingerichtet, die Signalstärke E des empfangenen zweiten Signals X2 zu messen.

Des Weiteren ist das zweite Messmittel 24 dazu eingerichtet, die Laufzeit D von dem ersten Zeitpunkt T1 des Sendens des ersten Signals X1 bis zu dem zweiten Zeitpunkt T2 des Empfangs des zweiten Signals X2 zu messen (siehe Figur 6).

Das zweite Messmittel 24 ist beispielsweise als ein Timer ausgebildet.

Ferner ist das Berechnungsmittel 25 dazu eingerichtet, die Position P der ersten Vorrichtung 10 in Abhängigkeit von der gemessenen Signalstärke E des empfangenen zweiten Signals X2 und der gemessenen Laufzeit D zu berechnen.

Ohne Einschränkung der Allgemeinheit ist in Figur 7 nur eine erste Vorrichtung 10 gezeichnet. Allerdings ist es möglich, mit dem Gerät 20 die jeweilige Position einer Anzahl N; N ≥ 1; von ersten Vorrichtungen 10 zu bestimmen. Dann ist die jeweilige erste Vorrichtung 10 dazu eingerichtet, das zweite Signal X2 als Antwort auf das von dem Gerät 20 gesendete erste Signal X1 an das Gerät 20 zu übertragen. Beispielsweise kann dann das erste Signal X1 mit zumindest einem Adressfeld ausgebildet werden, wobei das jeweilige Adressfeld eine Adresse einer ersten Vorrichtung 10 als Empfänger des ersten Signals X1 aufweist.

Alternativ oder zusätzlich kann das Gerät 20 ein Kanalcodiermittel (nicht gezeigt) aufweisen, welches dazu eingerichtet ist, das erste Signal X1 derart zu codieren, dass dieses nur von einer vorbestimmten Menge, beispielsweise genau einem, der Anzahl N der ersten Vorrichtungen 10 decodierbar ist.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar.

## Patentansprüche

1. Verfahren zum Bestimmen einer Position (P) einer ersten Vorrichtung (10), mit den Schritten:
a) Übertragen eines ersten Signals (X1) von einer zweiten Vorrichtung (20) zu der ersten Vorrichtung (10);
b) Übertragen eines zweiten Signals (X2) von der ersten Vorrichtung (10) zu der zweiten Vorrichtung (20) als Antwort auf das von der ersten Vorrichtung (10) empfangene erste Signal (X1), wobei das erste Signal (X1) und das zweite Signal (X2) über zumindest zwei unterschiedliche Medien (30, 40) übertragen werden;
c) Messen einer Signalstärke (E) des von der zweiten Vorrichtung (20) empfangenen zweiten Signals (X2);
d) Messen einer Laufzeit (D) von einem ersten Zeitpunkt des Sendens des ersten Signals (X1) bis zu einem zweiten Zeitpunkt des Empfangens des zweiten Signals (X2); und
e) Berechnen der Position (P) der ersten Vorrichtung (10) in Abhängigkeit von der gemessenen Signalstärke (E) des empfangenen zweiten Signals (X2) und der gemessenen Laufzeit (D).

2. Verfahren nach Anspruch 1,
**dadurch gekennzeichnet,**
**dass** das erste Signal (X1) und das zweite Signal (X2) zumindest teilweise drahtlos übertragen werden und/oder die zumindest zwei unterschiedlichen Medien (30, 40) eine unterschiedliche Signallaufzeit und eine unterschiedliche Signaldämpfung verursachen.

3. Verfahren nach Anspruch 1 oder 2,
**dadurch gekennzeichnet,**
**dass** die zumindest zwei unterschiedlichen Medien (30, 40) ausgebildet werden als
ein abstrahlendes Kabel und Luft,
ein abstrahlendes Kabel und Wasser,
ein Glasfaserkabel und Luft,
ein Glasfaserkabel und Wasser,
ein Polymerfaserkabel und Luft oder
ein Polymerfaserkabel und Wasser.

4. Verfahren nach Anspruch 1, 2 oder 3,
**dadurch gekennzeichnet,**
**dass** vor der Durchführung des Schrittes a) eine Kalibrierung an einer bekannten Referenzposition der ersten Vorrichtung (10) zur Bestimmung einer Referenzlaufzeit und einer Referenzsignalstärke des von der zweiten Vorrichtung (20) empfangenen zweiten Signals (X2) durchgeführt wird.

5. Verfahren nach Anspruch 3,
**dadurch gekennzeichnet,**
**dass** die Referenzlaufzeit von dem ersten Zeitpunkt (T1) des Sendens des ersten Signals (X1) zu dem zweiten Zeitpunkt (T2) des Empfangens des zweiten Signals (X2) und die Referenzsignalstärke des von der zweiten Vorrichtung (20) empfangenen zweiten Signals (X2) von der zweiten Vorrichtung (20) gemessen werden, wobei die Referenzposition der ersten Vorrichtung (10) der zweiten Vorrichtung (20) bekannt ist.

6. Verfahren nach Anspruch 4 oder 5,
**dadurch gekennzeichnet,**
**dass** die Position (P) der ersten Vorrichtung (10) in Abhängigkeit von der von der zweiten Vorrichtung (20) gemessenen Signalstärke (E), von der von der zweiten Vorrichtung (20) gemessenen Laufzeit (D), von der bekannten Referenzposition der ersten Vorrichtung (10), von der gemessenen Referenzlaufzeit und der gemessenen Referenzsignalstärke des empfangenen zweiten Signals (X2) berechnet wird.

7. Verfahren nach Anspruch 1, 2 oder 3,
**dadurch gekennzeichnet,**
**dass** die Position (P) der ersten Vorrichtung (10) in Abhängigkeit von der gemessenen Signalstärke (E) des empfangenen zweiten Signals (X2), der gemessenen Laufzeit (D), einer der zweiten Vorrichtung (20) bekannten Verzögerungszeit (V) zwischen einem dritten Zeitpunkt (T3) des Empfangens des ersten Signals (X1) durch die erste Vorrichtung (10) und einem vierten Zeitpunkt (T4) des Sendens des zweiten Signals (X2) durch die erste Vorrichtung (10) und einer der zweiten Vorrichtung (20) bekannten Sendeleistung (S) des zweiten Signals (X2) von der zweiten Vorrichtung (20) berechnet wird.

8. Verfahren nach Anspruch 7,
**dadurch gekennzeichnet,**
**dass** das zweite Signal (X2) mit einem Datenfeld ausgebildet wird, welches eine Verzögerungszeitinformation beinhaltet, welche die jeweilige Verzögerungszeit (V) angibt, welche der jeweiligen Differenz zwischen dem vierten Zeitpunkt (T4) und dem dritten Zeitpunkt (T3) entspricht.

9. Verfahren nach Anspruch 7,
**dadurch gekennzeichnet,**
**dass** ein drittes Signal (S3) von der ersten Vorrichtung (10) zu der zweiten Vorrichtung (20) vor oder nach dem zweiten Signal (X2) übertragen wird, welches ein Datenfeld aufweist, welches eine Verzögerungsinformation beinhaltet, welche die jeweilige Verzögerungszeit (V) angibt, welche der jeweiligen Differenz zwischen dem vierten Zeitpunkt (T4) und dem dritten Zeitpunkt (T3) entspricht.

10. Verfahren nach Anspruch 7,
**dadurch gekennzeichnet,**
**dass** vor der Durchführung des Schrittes a) zumindest ein Kalibrierungsschritt zur Bestimmung der Verzögerungszeit (V) zwischen dem dritten Zeitpunkt (T3) und dem vierten Zeitpunkt (T4) durchgeführt wird und die bestimmte Verzögerungszeit (V) in der zweiten Vorrichtung (20) gespeichert wird.

11. Verfahren nach Anspruch 1 oder einem der Ansprüche 2 bis 10,
**dadurch gekennzeichnet,**
**dass** die erste Vorrichtung (10) als eine mobile Vorrichtung und/oder die zweite Vorrichtung (20) als eine ortsfeste Vorrichtung ausgebildet ist.

12. Verfahren nach Anspruch 11,
**dadurch gekennzeichnet,**
**dass** die erste Vorrichtung (10) als eine mobile, drahtlose Kommunikationseinrichtung, insbesondere als Mobilfunkgerät, Notebook, PDA oder MDA ausgebildet ist.

13. Computerprogrammprodukt, welches auf einer programmgesteuerten Einrichtung die Durchführung eines Verfahrens nach einem der Ansprüche 1 bis 13 veranlasst.

14. Gerät (20) zum Bestimmen einer Position (P) einer ersten Vorrichtung (10), mit:
a) einem Sendemittel (21), welches dazu eingerichtet ist, ein erstes Signal (X1) an die erste Vorrichtung (10) zu übertragen, wobei das erste Signal (X1) dazu geeignet ist, ein Senden eines zweiten Signals (X2) von der das erste Signal (X1) empfangenden ersten Vorrichtung (10) zu initiieren, wobei das erste Signal (X1) und das zweite Signal (X2) über zumindest zwei unterschiedliche Medien (30, 40) übertragen werden;
b) einem Empfangsmittel (22), welches dazu eingerichtet ist, das von der ersten Vorrichtung (10) gesendete zweite Signal (X2) zu empfangen;
c) einem ersten Messmittel (23), welches dazu eingerichtet ist, die Signalstärke (E) des empfangenen zweiten Signals (X2) zu messen;
d) einem zweiten Messmittel (24), welches dazu eingerichtet ist, die Laufzeit (D) von einem ersten Zeitpunkt (T1) des Sendens des ersten Signals (X1) bis zu einem zweiten Zeitpunkt des Empfangens des zweiten Signals (X2) zu messen; und
e) einem Berechnungsmittel (25), welches dazu eingerichtet ist, die Position (P) der ersten Vorrichtung (10) in Abhängigkeit von der gemessenen Signalstärke (E) des empfangenen zweiten Signals (X2) und der gemessenen Laufzeit (D) zu berechnen.

15. Gerät nach Anspruch 14,
**dadurch gekennzeichnet,**
**dass** ein Timer-Mittel (24) vorgesehen ist, welches die Differenz zwischen dem zweiten Zeitpunkt (T2) und dem ersten Zeitpunkt (T1) misst.

16. Anordnung (1) mit:
a) einem Gerät (20) nach Anspruch 15 oder 16; und
b) einer Anzahl N; N ≥ 1; von ersten Vorrichtungen (10), wobei die jeweilige erste Vorrichtung (10) dazu eingerichtet ist, das zweite Signal (X2) als Antwort auf das von dem Gerät (20) gesendeten ersten Signal (X1) an das Gerät (20) zu übertragen.

17. Anordnung nach Anspruch 16,
**dadurch gekennzeichnet,**
**dass** das erste Signal (X1) mit zumindest einem Adressfeld ausgebildet ist, wobei das jeweilige Adressfeld eine Adresse einer ersten Vorrichtung (10) als Empfänger des ersten Signals (X1) aufweist.

18. Anordnung nach Anspruch 16 oder 17,
**dadurch gekennzeichnet,**
**dass** das Gerät (20) ein Kanalcodiermittel aufweist, welches dazu eingerichtet ist, das erste Signal (X1) derart zu codieren, dass dieses nur von einer vorbestimmbaren Menge der Anzahl N der ersten Vorrichtungen (10) decodierbar ist.
